(19) Europäisches Patentamt
European Patent Office
Office européen des brevets

(11) **EP 2 056 055 A1**

(12) **EUROPEAN PATENT APPLICATION**
published in accordance with Art. 153(4) EPC

(43) Date of publication:
**06.05.2009 Bulletin 2009/19**

(51) Int Cl.:
***F28D 15/02*** *(2006.01)*

(21) Application number: **07792802.6**

(22) Date of filing: **21.08.2007**

(86) International application number:
**PCT/JP2007/066202**

(87) International publication number:
**WO 2008/023707 (28.02.2008 Gazette 2008/09)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.08.2006 JP 2006227396**

(71) Applicant: **Asahi Kasei Fibers Corporation Osaka-shi, Osaka 530-8205 (JP)**

(72) Inventor: **OBARA, Kazuyuki Toyko 100-8440 (JP)**

(74) Representative: **Weber, Thomas Patentanwälte von Kreisler Selting Werner Deichmannhaus am Dom Bahnhofsvorplatz 1 50667 Köln (DE)**

(54) **HEAT PIPE TYPE HEAT TRANSFER DEVICE**

(57)     An object of the present invention is to provide a heat transfer device succeeded in satisfying both the reduction in size and weight and the high heat transfer performance by incorporating an organic fine particle into a working fluid and optimizing its size, mixing ratio, composition, surface properties and the like.

The heat transfer device of the present invention is a heat pipe type heat transfer device comprising a closed container having housed therein a working fluid containing from 0.001 to 5 wt% of an organic fine particle having an average particle diameter of 1 to 1,000 nm.

# Fig.1

**Description**

TECHNICAL FIELD

The present invention relates to a heat pipe type heat transfer device. More specifically, the present invention relates to a heat pipe type heat transfer device suitable for use in a field requiring a small, lightweight and effective heat transfer device, such as a personal computer.

BACKGROUND ART

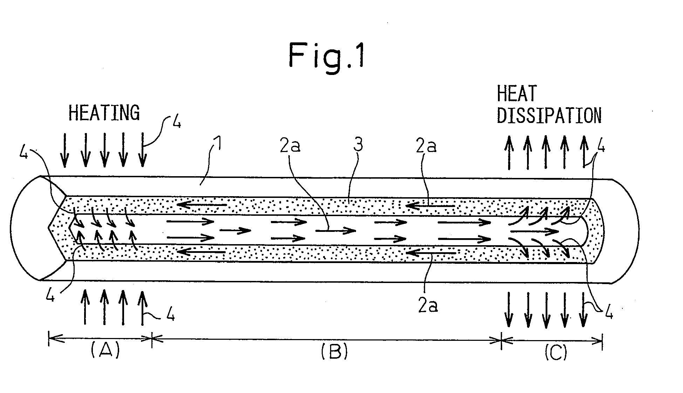

Fig. 1 shows a general heat pipe type heat transfer device. Numeral 1 denotes a closed container (for example, made of copper), 2a denotes the moving direction (in the arrow direction) of a working fluid (e.g., water, ammonia) housed in the closed container, 3 denotes a wick, 4 denotes heat flow (heating, heat dissipation), and (A), (B) and (C) denote an evaporating part, an adiabatic part and a condensing part, respectively, of a heat pipe type heat transfer device. The principle of thermal conduction of this conventional heat pipe type heat transfer device is that a working fluid evaporated in the evaporating part (A) is condensed in the condensing part (C) and circulated from the condensing part (C) to the evaporating part (A) through a wick 3 having a structure such as porous body, mesh or groove provided on the surface of closed container 1, thereby conducting heat. This is a device that can enable rapid and highly efficient heat transfer with a small temperature difference.

Of the three elements constituting the heat pipe type heat transfer device, i.e., a closed container, wick and working fluid, working fluid is selected by taking into consideration the usage, operating temperature, amount of heat transport, allowable thermal resistance and profitability. In order to satisfy the required amount of heat transport, it is necessary that the merit number for the working fluid, which is described later, be confirmed. As for the allowable thermal resistance, in a practical heat pipe, the thermal resistance at the inflow and outflow of heat is an important factor. In the case of heat transport with a small temperature difference, a working fluid having a large transfer coefficient for evaporative heat and condensing heat must be selected. The conventional working fluid is composed of only a liquid, and a working fluid having mixed therein a particle is not currently being used.

As one use of utilizing the high-efficiency heat transfer performance of the heat pipe type heat transfer device, the device can be employed in a personal computer (PC), in particular a notebook PC. In a notebook PC in order to achieve high performance while reducing the size and weight, the clock frequency of the central processing unit MPU is increased, and the MPU is highly integrated. As MPUs become highly integrated, the heat density of a notebook PC increases. In particular, the heat density of a MPU which is a highly exothermic device is 100 W/cm$^2$ and reaches a level comparable to a nuclear reaction furnace. Therefore, the heat pipe type heat transfer device is also required to be reduced in size and weight and have a high heat conducting property.

However, when a pipe with a small diameter is employed for size reduction of the heat pipe type heat transfer device, heat transfer performance greatly decreases due to movement inhibition of working fluid, which results in a decrease in the heat transfer area and an increase in interaction with the container wall. In particular, the transfer coefficient for evaporative heat and condensing heat decreases, and sometimes a failure occurs in achieving effective heat transfer. This is a major limit in the heat transport amount when low thermal conductivity is required.

It is known that addition of a metal or its oxide, which is small enough to be well suspended in a working fluid, or addition of a carbon nanoparticle brings about substantial enhancement of the thermal conductivity of a fluid and in turn substantial enhancement of the thermal conduction.

For example, Non-Patent Document 1 (Choi, U.S., "Enhancing Thermal Conductivity of Fluids with Nanoparticles" of Developments and Applications of Non-Newtonian Flows, eds. D.A. Siginer and H.P. Wang, The American Society of Mechanical Engineers, New-York, FED-Vol. 66, pp. 99-105 (1995)) discloses, that when a metal nanoparticle such as gold or copper is dispersed in a medium, thermal conductivity is enhanced. Patent Document 1 (Japanese Unexamined Patent Publication No. 2004-538349) discloses a heat transfer fluid composite having suspended therein a carbon nanoparticle. For example, a nanotube and diamond, which elevate the thermal conductivity of a heat transfer fluid, are set forth as the carbon nanoparticle. Patent Document 2 (Japanese Unexamined Patent Publication No. 2004-085108) discloses a method for promoting thermal conduction by increasing the thermal conductivity and thermal diffusivity of a heat medium, where an ultrafine particle solid is mixed in a heat medium fluid, and is made to float, and the preferred ultrafine particles include graphite cluster diamonds, cluster diamonds, microdiamonds, graphite, molybdenum, ceramic, silicon carbide, magnesium oxide and aluminum oxide.

In all of these related arts, it is disclosed that as the fine particles used have a smaller particle size or the nanoparticle has a higher thermal conductivity, the effect of enhancing thermal conductivity of a working fluid becomes greater. In particular, high thermal conductivity is important and a fine particle having a thermal conductivity higher by at least two figures, preferably three or more figures, than the heat medium is disclosed. For example, in the case where the heat medium fluid is water (thermal conductivity: 0.6 W/m·K), the nano-copper particle in the fluid provides a thermal conductivity higher than aluminum oxide, because the thermal conductivity of copper is 400 W/m·K and is higher than the thermal conductivity of 20 W/m·K of aluminum oxide.

However, when many nanoparticles are suspended in order to enhance thermal conductivity, the nanoparticle concentration is locally increased because the heat pipe type heat transfer device involves evaporation of the working fluid, and this causes aggregation of nanoparticles with each other or attachment and precipitation of the nanoparticle on the inner wall of the container occurs and heat transfer performance decreases with age.

As described above, with the progress of high-performance and high-integration fabrication in the usage to which the heat pipe type heat transfer device is applied, the device is required to be reduced in size and weight and have high thermal conduction, nevertheless, it is difficult to satisfy both size reduction and high thermal conduction at the same time. At present, the diameter of the heat pipe is generally as large as from 4 to 6 mm to place importance on heat transfer performance.

DISCLOSURE OF THE INVENTION

The present invention has been made taking the above circumstances into consideration, and an object of the present invention is to provide a heat transfer device that satisfies both reduction in size and weight, and high heat transfer performance by incorporating an organic fine particle into a working fluid and optimizing its size, mixing ratio, composition, surface properties and the like.

As a result of intensive studies to attain the above object, the present inventors have found that when an organic fine particle is mixed in a working fluid, the organic particle brings about a phenomenon of inhibiting growth of air bubbles produced on the inner wall of a container along the evaporation of the working fluid and allows smooth heat transfer from the container inner wall to the working fluid, and this produces an effect of enhancing the thermal conductivity of the evaporating part. The present invention has been accomplished based on this finding.

The present invention is as follows.

(1) A heat pipe type heat transfer device comprising a closed container having housed therein a working fluid containing from 0.001 to 5 wt% of an organic fine particle having an average particle diameter of 1 to 1,000 nm.
(2) The heat pipe type heat transfer device as describe in (1) above, wherein the working fluid is an aqueous fluid and the organic fine particles are surface-hydrophilic.

By virtue of using the heat pipe type heat transfer device of the present invention, high-efficiency heat transfer can be realized in a mobile device, such as a notebook PC or cellular phone, requiring both reduction in size and weight, and enhancement of performance.

BRIEF DESCRIPTION OF THE DRAWINGS

Fig. 1 is a view showing one example of the general wick heat pipe type heat transfer device.

Numerical references are as follows.
1 is closed container, 2a is moving direction of working fluid, 3 is wick, 4 is heat flow (heating, heat dissipation), (A) is evaporating part of heat pipe, (B) is adiabatic part of heat pipe and (C) is condensing part of heat pipe.

BEST MODE FOR CARRYING OUT THE INVENTION

The fine particles for use in the present invention must be of an organic material. The true specific gravity of the organic material is generally 2 or less which is smaller than the specific gravity of the conventionally employed metal, its oxide or carbon, and is closer to the specific gravity of those used as a working fluid close to ordinary temperature, such as water, ammonia, alcohols (e.g., ethanol), hydrocarbons (e.g., heptane) and fluorocarbons (e.g., freon-11). Accordingly, the fine particle comprising an organic material rarely precipitates by gravitation and is excellent in long-term stability. Furthermore, the organic material is soft and is expected to suppress the reduction with aging of the heat transfer performance by decreasing or eliminating the abrasion of the container inner wall or wick.

The true specific gravity of the organic fine particle is from 0.5 to 2, preferably from 0.7 to 1.6. The difference in the specific gravity from the working fluid is preferably smaller because dispersibility is better.

The kind of the organic material is not particularly limited, and conventionally known organic materials can be appropriately used. Examples thereof include a generally employed polymer compound such as homo- and/or co-polymer, e.g., polystyrene, styrene-acrylate, styrenebutadiene, styrene-acryl, polyethylene, polymethyl methacrylate, polyacrylic acid, polydivinylbenzene, polyvinyltoluene, polylactic acid, polyglycolic acid, polyglutamic acid and polyvinyl alcohol; thermoset resin, e.g., phenolic resin, formalin resin and melamine resin; and natural polymer (e.g., chitin, chitosan, cellulose, starch).

In the present invention, the average particle diameter of the organic fine particle is from 1 to 1,000 nm, preferably from 10 to 500 nm, more preferably from 20 to 200 nm. With the size in this range, the number of particles increases even when the amount is small based on weight and not only the thermal conductivity in the evaporating part is effectively elevated, but also dispersibility is advantageously enhanced without generating a particle scale. The mechanism for elevating thermal conductivity in the evaporating part by the organic fine particle is not clear but is presumed as follows.

As the diameter of the pipe becomes smaller, interaction between the container inner wall and the working fluid is increased and an air bubbles generated due to evaporation of the working fluid do not easily separate from the container inner wall, and as a result the air bubbles grow and inhibit heat transfer from the container inner wall to the working fluid and also increase thermal resistance. The organic fine particle removes this air bubble by separating the air bubble from the container inner wall before the air bubble becomes too large, whereby heat transfer from the container inner wall to the working fluid proceeds smoothly. The probability of the organic fine particle removing the air bubble becomes higher as the number of particles is larger, and a smaller average particle diameter is more effective. If the average particle diameter of the organic fine particle exceeds 1,000 nm, the activities described above are decreased and the effect lessens.

Japanese Unexamined Patent Publication No. 2004-085108 *supra* discloses that the thermal conductivity of a working fluid is elevated by a metal fine particle or the like and in turn heat transfer performance of the heat transfer device is enhanced. Therefore, it is presumed from the above disclosure that use of an organic fine particle generally having low thermal conductivity which is not so different from that of the working fluid has no effect on the enhancement of heat transfer performance. However, in a heat pipe type heat transfer device involving evaporation and condensation, even an organic fine particle which does not contribute very much to the enhancement of the thermal conductivity of a working fluid exerts a remarkable effect of enhancing the heat transfer performance.

The shape of the organic fine particle is not particularly limited, but a shape close to a sphere which reduces flow resistance is preferred. Furthermore, a shape having an aspect ratio (ratio of length/diameter) of 5 or more, such as needle or fibril, is also preferred because the projected area is large and the effect of inhibiting the growth of air bubbles in the evaporating part is high.

In the present invention, the content of the organic fine particle is from 0.001 to 5 wt%, preferably from 0.002 to 1 wt%, more preferably from 0.005 to 0.1 wt%. With the content in this range, the heat transfer performance is satisfactorily enhanced and even when the content becomes locally high due to evaporation of the working fluid, aggregation of organic fine particles with each other or precipitation of the organic fine particle rarely occurs and this is preferable. It is particularly preferred in order to suppress the generation of a particle scale, to make the average particle diameter small and decrease the content as much as possible while maintaining the number of particles to a certain value or more. The number of particles is preferably from $1 \times 10^9$ to $1 \times 10^{17}$ particles/cm$^3$, more preferably from $1 \times 10^{10}$ to $1 \times 10^{15}$ particles/cm$^3$.

The production method of the organic fine particles is not particularly limited, and a conventionally known method is used. Examples thereof include a dry grinding process, a wet grinding process, a mechanical dispersion process, a spray drying process, an in-liquid drying process, a spherical crystallization process, an emulsion solvent diffusion process, a low-pressure sublimation process, a reprecipitation process and an in-liquid pulsed laser ablation process.

As for the working fluid used in the present invention, a fluid generally used for a heat pipe type heat transfer device can be used. Examples thereof include water, ammonia, alcohols such as ethanol, hydrocarbons such as heptane, and fluorocarbons such as freon-11, but the working fluid is not particularly limited. One fluid may also be used alone or some of the fluids may be mixed and used. In the case of mixed fluids, fluid species and mixing ratio which enables uniform dissolution with each other is preferably selected.

The working fluid used is preferably an aqueous fluid containing 80 wt% or more of water and having a large merit number defined by the following formula (1):

$$\text{Merit number} = (\text{density} \times \text{surface tension} \times \text{evaporative latent heat})/\text{viscosity} \qquad (1)$$

The maximum heat transport amount becomes larger as the merit number is larger, and therefore, the merit number is preferably large particularly in a heat pipe with a small diameter, where the working fluid amount necessarily becomes small. Representative fluids have the following merit number: ammonia ($1.1 \times 10^{11}$), freon-11 ($1.2 \times 10^{10}$), freon-113 ($7.3 \times 10^9$), pentane ($1.5 \times 10^{10}$), acetone ($3 \times 10^{10}$), methanol ($4.8 \times 10^{10}$), ethanol ($4.1 \times 10^{10}$), heptane ($1.3 \times 10^{10}$),

water ($5.1 \times 10^{11}$) and naphthalene ($3.4 \times 10^{10}$). Water has a large merit number and is preferred because the maximum heat transport amount becomes large. Use of water alone is preferred, but in order to enhance the dispersibility of the organic fine particle, ketones such as acetone, alcohols such as methanol and ethanol, and a surfactant may be mixed in the water. In this case, water is preferably in a concentration of 80 wt% or more so as to maintain the large merit number.

In the case where an aqueous fluid is used as the working fluid, the organic fine particle is preferably a surface-hydrophilic so as to scarcely cause association, aggregation or precipitation of the organic particle. An organic material which itself is hydrophilic is preferred, such as homo- and/or co-polymer (e.g., polyacrylic acid, polyglycolic acid, polyglutamic acid, polyvinyl alcohol) and natural polymer (e.g., chitin, chitosan, cellulose, starch). In the case of using a hydrophobic organic material, a hydrophilic functional group such as carboxyl group, amino group, amido group, hydroxyl group, sulfonyl group and sulfonic acid group may be bound to the fine particle surface. Also, a surfactant may be adsorbed onto the organic fine particle to render the surface hydrophilic. A nonionic surfactant such as nonionic fatty acid type, nonionic higher alcohol type and alkylphenol type, an amphoteric surfactant such as amino acid type, betaine type and amine oxide type, an anionic surfactant such as anionic fatty acid type, linear alkylbenzene type, anionic higher alcohol type, $\alpha$-olefin type and normal paraffin type, or a cationic surfactant such as quaternary ammonium salt type, is used. A nonionic surfactant is preferred, and a nonionic higher alcohol-based surfactant is more preferred.

As for the closed container, a large number of containers comprising various materials and having various structures are known as the closed container of a heat pipe type heat transfer device, and these well-known closed containers may also be used in the present invention without any particular limitation.

EXAMPLES

The present invention is described below by referring to specific Examples, but the present invention is not limited only to these Examples. The measuring methods are described below.

<Measuring Method of Average Particle Diameter>

The average particle diameter of the organic fine particle was measured using a Microtrack particle size distribution measuring apparatus (manufactured by Leeds) by a laser interference method. Here, the average particle diameter indicates a 50% particle diameter.

<Measuring Method of Thermal Resistance>

A heat pipe obtained by mounting a composite wick into a copper-made pipe having an outer diameter of 2 mm and a length of 250 mm was evacuated and after filling a predetermined working fluid of 0.1 cm$^3$, used for tests. One end in 55 mm of the heat pipe disposed horizontally was heated at an output of 25 W by using a copper block heater having inserted therein a cartridge heater, and another end in 70 mm was cooled by a water-cooling jacket at a constant temperature and a constant flow rate. The temperature was measured at 6 portions in each of the heating part and cooling part by a K-type sheath thermocouple, and the heating part average temperature and the cooling part average temperature were determined. The difference between heating part average temperature and cooling part average temperature was divided by the heater output 25 W, thereby calculating the thermal resistance. A smaller thermal resistance indicates that the heat transfer performance is more excellent.

(Examples 1 to 3)

Heptane was mixed with 0.005 wt% (Example 1), 0.03 wt% (Example 2) or 0.5 wt% (Example 3) of polystyrene particle having a particle diameter of 65 nm (Estapor, trade name, produced by Moritex Corp.), and the mixture was used as the working fluid. The thermal resistance value was 0.6 K/W for 0.005 wt%, 0.3 K/W for 0.03 wt%, and 0.4 K/W for 0.5 wt%. As compared with Comparative Example 1 described later, in all Examples, the thermal resistance value is small and the heat transfer performance is excellent. Particularly, in Example 2 of 0.03 wt%, the thermal resistance value was 0.3 K/W and good heat transfer performance was obtained.

(Examples 4 to 6)

The working fluids were prepared in the same manner as in Examples 1 to 3 except for changing the average particle diameter to 420 nm. The thermal resistance value was 0.8 K/W for 0.005 wt% (Example 4), 0.5 K/W for 0.03 wt% (Example 5) and 0.7 K/W for 0.5 wt% (Example 6). As compared with Comparative Example 1, in all of the Examples, the thermal resistance value is low and heat transfer performance is excellent. Particularly, in Example 5 of 0.03 wt%, the thermal resistance value was 0.5 K/W and good heat transfer performance was obtained.

(Comparative Example 1)

The thermal resistance was calculated in the same manner as in Example 1 except that the working fluid was heptane alone, and found to be 1.1 K/W.

(Example 7 and Comparative Example 2)

With respect to water alone (Comparative Example 2) and a working fluid obtained by mixing water and 0.03 wt% of a styrene-acrylate particle being surface-modified with carboxyl group and having an average particle diameter of 65 nm (Estapor, trade name, produced by Moritex Corp.) (Example 7), the thermal resistance was calculated and found to be 0.9 K/W for water alone (Comparative Example 2) and 0.1 K/W for 0.03 wt% (Example 7).

Particularly, in Example 7 of 0.03 wt%, the thermal resistance value was 0.1 K/W and very good heat transfer performance was obtained.

INDUSTRIAL APPLICABILITY

The heat pipe type heat transfer device of the present invention is suitably used particularly in a field requiring a small, lightweight and effective heat transfer device, such as a personal computer.

**Claims**

1. A heat pipe type heat transfer device comprising a closed container having housed therein a working fluid containing from 0.001 to 5 wt% of an organic fine particle having an average particle diameter of 1 to 1,000 nm.

2. The heat pipe type heat transfer device according to claim 1, wherein the working fluid is an aqueous fluid and the organic fine particles are surface-hydrophilic.

# Fig.1

HEATING

HEAT
DISSIPATION

(A)  (B)  (C)

**INTERNATIONAL SEARCH REPORT**

| International application No. |
| --- |
| PCT/JP2007/066202 |

A. CLASSIFICATION OF SUBJECT MATTER
*F28D15/02*(2006.01)i

According to International Patent Classification (IPC) or to both national classification and IPC

B. FIELDS SEARCHED

Minimum documentation searched (classification system followed by classification symbols)
F28D15/02

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2004-85108 A (Keisuke KASAHARA),<br>18 March, 2004 (18.03.04),<br>Claims 1 to 3, 5, 7, 9<br>(Family: none) | 1<br>2 |
| Y | JP 2003-73658 A (Nihon Cima Co., Ltd.),<br>12 March, 2003 (12.03.03),<br>Par. Nos. [0008], [0012]<br>(Family: none) | 2 |

| ☐ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>12 November, 2007 (12.11.07) | Date of mailing of the international search report<br>20 November, 2007 (20.11.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004538349 A

- JP 2004085108 A

**Non-patent literature cited in the description**

- Enhancing Thermal Conductivity of Fluids with Nanoparticles. **CHOI, U.S. ; D.A. SIGINER ; H.P. WANG.** Developments and Applications of Non-Newtonian Flows. The American Society of Mechanical Engineers, 1995, vol. 66, 99-105